# EUROPÄISCHE PATENTSCHRIFT

(11) **EP 1 258 184 B1**
(45) Veröffentlichungstag und Bekanntmachung des Hinweises auf die Patenterteilung: **08.02.2006**
(21) Anmeldenummer: 02010091.3
(22) Anmeldetag: 07.05.2002
(51) Int. Cl.: A01B 63/02, A01D 75/30

(54) **Arbeitsaggregatekombination**
Combination of working units
Combinaison d'unités de travail

(30) Priorität: 17.05.2001 DE 20108319 U
(43) Veröffentlichungstag der Anmeldung: 20.11.2002
(73) Patentinhaber: Maschinenfabrik Bernard Krone GmbH, 48480 Spelle (DE)
(72) Erfinder: Krone, Bernard, Dr.-Ing.E.h., 48480 Spelle (DE); Egbers, Martin, 49477 Ibbenbüren (DE)

(56) Entgegenhaltungen:
- DE-A- 3 535 082
- GB-A- 1 273 758
- US-A- 3 722 193
- US-A- 4 211 057
- US-A- 4 594 840
- US-A- 4 878 338
- US-A- 5 713 190

## Beschreibung

Die Erfindung betrifft eine Arbeitsaggregatekombination an einem selbstfahrenden Trägerfahrzeug bestehend aus vorzugsweise im landwirtschaftlichen Bereich anwendbaren Arbeitsaggregaten, wie insbesondere Mäheinheiten oder Mäh- und Aufbereitungseinheiten zur Ernte von landwirtschaftlichem Erntegut nach dem Oberbegriff des Anspruchs 1. Eine ähnliche Arbeitsaggregate kombination ist bareits aus US-A-4 878 338 bekannt. Das Trägerfahrzeug ist dazu mit einem im Frontanbau angebrachten Arbeitsaggregat versehen, dem zumindest ein weiteres im Seitenanbau angebrachtes Arbeitsaggregat zugeordnet sein kann. Über eine Aushubvorrichtung sind das oder die Arbeitsaggregate aus einer bodennahen Arbeits- und Betriebsstellung in eine teilweise ausgehobene Vorgewendestellung oder in eine ganz ausgehobene Transportstellung überführbar. Derartige Arbeitsaggregatekombinationen sind in vielfältigen Ausführungsformen bekannt.

In der Praxis kommt es häufiger vor, daß beim Mähen von Randzonen im Bereich von Zäunen, hier insbesondere in Eckbereichen das Trägerfahrzeug mit den in der Arbeits- und Betriebsstellung befindlichen Mäheinheiten in Rückwärtsfahrt zurück gefahren werden muß. Hierzu ist es unumgänglich, daß vor der Rückwärtsfahrt alle Mäheinheiten vom Bediener in eine Vorgewendestellung angehoben werden müssen. Im praktischen Einsatz zeigt sich jedoch, daß diese Aushebung der Mäheinheiten in die Vorgewendestellung vom Bediener oft vergessen wird und es dann zu Beschädigungen an den Mäheinheiten kommt, in dem sich diese bei der Rückwärtsfahrt in das bereits gemähte Erntegut oder sogar in den Boden drükken. Beschädigungen an den Aufhängungen der Mäheinheiten sind die Folge.

Aufgabe der Erfindung ist es daher, ein bekanntes Trägerfahrzeug so zu gestalten, daß Bedienungsfehler, insbesondere bei der Arbeit in der Praxis und bei der Rückwärtsfahrt vermieden werden.

Zur Lösung der gestellten Aufgabe zeichnet sich die Arbeitsaggregatekombination der vorstehend genannten Art durch die im Anspruch 1 angegebenen kennzeichnenden. Merkmale aus. Hinsichtlich der weiteren Ausgestaltung der Erfindung wird auf den Anspruch 2 verwiesen.

Bei einer Arbeitsaggregatekombination gemäß der Erfindung ist es vorgesehen, die Aushubbewegung der Arbeitsaggregate in einer Ausführung mit zumindest einem im Frontanbau angebrachten Arbeitsaggregat oder einem im Frontanbau angeordneten Arbeitsaggregat mit zumindest einem in Bezug zur Fahrt- und Arbeitsrichtung des Trägerfahrzeuges im Seitenanbau angebrachten Arbeitsaggregat derart zu steuern, daß mit dem Befehl zur Rückwärtsfahrt des Trägerfahrzeuges zwangsweise eine Aushebung des oder der Arbeitsaggregate(s) erfolgt. Dazu wird erfindungsgemäß, eine Aushubvorrichtung des Trägerfahrzeuges, welche der Überführung des oder der Arbeitsaggregate aus einer bodennahen Arbeits- und Betriebsstellung in eine teilweise ausgehobene Vorgewendestellung oder in eine ganz ausgehobene Transportstellung dient, derart mit einer Steuer- oder Schaltvorrichtung für den Fahrantrieb des Trägerfahrzeuges gekoppelt, daß bei der Aktivierung des Befehls zur Einleitung der Rückwärtsfahrt zwangsweise zumindest eine Überführung des oder der Arbeitsaggregate in die teilweise ausgehobene Vorgewendestellung eingeleitet wird. Die teilweise ausgehobene Vorgewendestellung ist hier so definiert, daß die Arbeitsaggregate wenigstens soweit ausgehoben sind, daß bereits abgelegte Erntegutschwaden von den Arbeitswerkzeugen der Arbeitsaggregate nicht mehr berührt und durcheinander geworfen werden können. Als Arbeitsaggregatekombinationen, welche der Erfindung zugrunde gelegt werden, kommen beispielsweise selbstfahrende Trägerfahrzeuge oder Antriebsmaschinen.in Frage, die zumindest mit einem frontseitig angebauten als Mäh- und Aufbereitungseinheit ausgebildeten Arbeitsaggregat ausgerüstet sind. Diesem frontseitig angebrachten Arbeitsaggregat können aber auch weitere im Seitenanbau angeordnete und als Mäh- und Aufbereitungseinheiten ausgeführte Arbeitsaggregate zugeordnet sein, wobei unter Seitenanbau die Varianten einer Anbauanordnung seitlich neben dem frontseitigen Arbeitsaggregat, der Zwischenachsanordnung und der Heckanbauanordnung verstanden wird. Weiterhin kann der Erfindung aber auch eine Arbeitsaggregatekombination zugrunde gelegt sein, welche als selbstfahrender Häcksler mit einem frontseitig angebauten und austauschbaren Erntevorsatzgerät zur Aufnahme von Maispflanzen oder mit einer Aufnahmetrommel zur Aufnahme von Schwaden aus Gras oder dgl. ausgebildet ist.

Vorteilhafte Ausführungsformen der Erfindung können davon ausgehen, daß die Koppelung zwischen der Aushubvorrichtung des Trägerfahrzeuges mit einer Steuer- und Schaltvorrichtung des Fahrantriebes über mechanische, elektrische, hydraulische oder pneumatische Schaltelemente erfolgt. Es ist aber auch ohne weiteres denkbar, daß bei der Auswahl der Schaltelemente Kombinationen aus mechanisch/elektrisch oder hydraulisch/elektrisch oder pneumatisch/elektrisch ausgeführten Ausführungen bevorzugt werden. Weiterhin ist in diesem Zusammenhang auch ein Einsatz von Bordcomputern vorstellbar, so daß die Koppelung der Aushubvorrichtung mit der Steuer- und Schaltvorrichtung des Fahrantriebes über eine Verknüpfung von Programmabläufen (Software) des Fahrantriebes und der Aushubvorrichtung erreicht wird.
Eine vorteilhafte Weiterbildung der Erfindung geht davon aus, daß beispielsweise bei einer aus einer frontseitig angebauten Mäh- und Aufbereitungseinheit und aus zwei bezüglich der Fahrt- und Arbeitsrichtung seitlich angebrachten Mäh- und Aufbereitungseinheiten bestehenden Arbeitsaggregatekombination eine Folgeschaltung zum Ausheben der Mäh- und Aufbereitungseinheiten vorgesehen ist. Das bedeutet, daß beim Aushubvorgang der Mäh- und Aufbereitungseinheiten zunächst die frontseitige Mäh- und Aufbereitungseinheit ausgehoben wird und nach Ablauf eines vorgegebenen und der Fahrgeschwindigkeit des Trägerfahrzeuges entsprechenden Zeitintervals auch die seitlich angeordneten Mäh- und Aufbereitungseinheiten ausgehoben werden. Gemäß der Erfindung ist es nun vorgesehen, für den Zeitraum der Rückwärtsfahrt eine derartige Folgeschaltung aufzuheben, da vor dem Beginn der Rückwärtsfahrt natürlich alle Mäh- und Aufbereitungseinheiten gleichzeitig ausgehoben werden müssen, um Beschädigungen an den Aufhängungen der Mäh- und Aufbereitungseinheiten zu vermeiden. Eine solche Aufhebung einer standardmäßigen Funktion ist beispielsweise durch eine zusätzliche Programmanweisung im Bordcomputer erreichbar.

Eine detaillierte Beschreibung des Gegenstandes der Erfindung erfolgt nun anhand eines Ausführungsbeispieles. In der Zeichnung stellt im einzelnen dar:

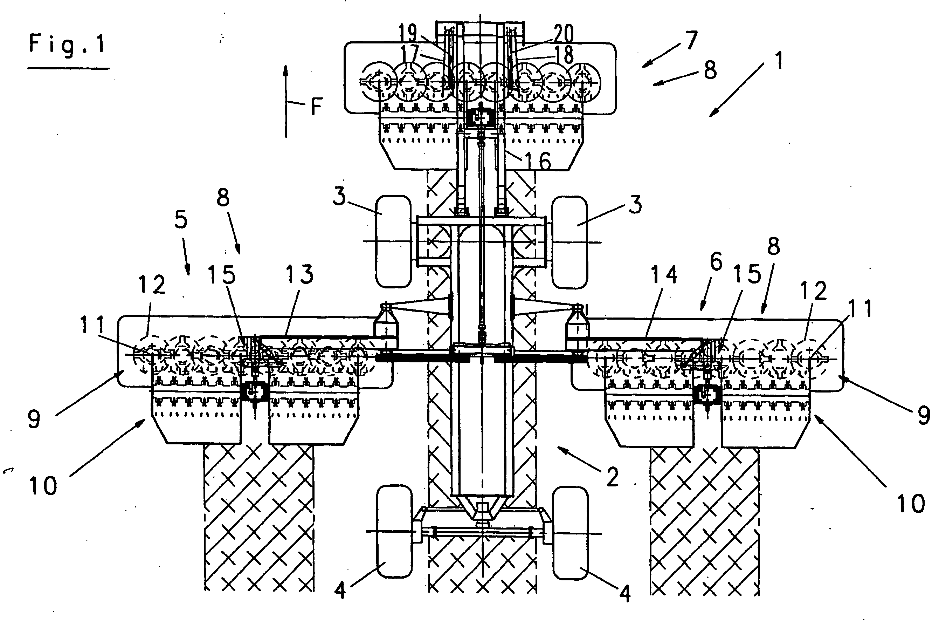

Fig.1 ein schematisch dargestelltes Trägerfahrzeug mit einer erfindungsgemäßen Arbeitsaggregatekombination mit als Mäh- und Aufbereitungseinheiten ausgeführten Arbeitsaggregaten in Arbeits- und Betriebsstellung;

Eine erfindungsgemäße Arbeitsaggregatekombination 1 ist in Fig.1 dargestellt und besteht aus beidseitig an einem selbstfahrenden Trägerfahrzeug 2 zwischen den Vorder- und Hinterräder 3,4 angeordneten Arbeitsaggregaten 5,6 und einem unmittelbar vor den Vorderrädern 3 angebrachten Arbeitsaggregat 7. Bei der Arbeitsaggregatekombination 1 handelt es sich um ein Ausführungsbeispiel, bei dem als Arbeitsaggregate 5,6,7 eine Mäh- und Aufbereitungseinheit 8 zur Ernte von landwirtschaftlichem Halmgut eingesetzt ist. Eine derartige Mäh- und Aufbereitungseinheit 8 setzt sich aus einem Mähwerk 9 sowie aus einem Aufbereiter 10 zusammen, wobei das Mähwerk 9 um in etwa vertikale Rotationachsen 11 rotierende und als Schneidelemente 12 ausgebildete Arbeitswerkzeuge umfaßt. Als Arbeitsaggregate 5,6,7 können aber auch Mulcher, Kehrgeräte oder dgl. Arbeitsaggregate mit völlig unterschiedlichen Arbeitswerkzeugen zur Anwendung kommen. Als Trägerfahrzeug 2 ist eine selbstfahrende Arbeits- und Antriebsmaschine vorgesehen, die eine Lenkung der Hinterräder 4 aufweist. Aus Gründen der besseren Übersichtlichkeit ist das Trägerfahrzeug 2 nur schematisch dargestellt. Die Anordnung der Arbeitsaggregate 5,6,7, insbesondere der Mäh- und Aufbereitungseinheiten 8 am Trägerfahrzeug 2 ist so gewählt, daß eine durchgehende maximale Gesamtarbeitsbreite der Arbeitsaggregatekombination 1 entsteht. Die beidseitig vom Trägerfahrzeug 2 angebrachten Mäh- und Aufbereitungseinheiten 8 sind dazu über schwenkbar am Trägerfahrzeug 2 arretierte Ausleger- und Tragarme 13,14 und einer sich daran anschließenden Gelenkanordnung 15 mit dem Trägerfahrzeug 2 verbunden und können so in an sich bekannter Weise aus einer in etwa horizontalen Arbeits- und Betriebsstellung in eine annähernd vertikale Transportstellung und zurück überführt werden. Die frontseitig am Trägerfahrzeug 2 angeordnete Mäh- und Aufbereitungseinheit 8 ist in dem in Fig.1 dargestellten Ausführungsbeispiel über einen höhenbeweglich mit dem Trägerfahrzeug 2 verbundenen Tragrahmen 16 sowie weiteren schwenkbeweglichen Lenkern 17,18 und hydraulischen Kolben-Zylinder-Anordnungen 19,20 aus der bodennahen Arbeits- und Betriebsstellung in eine in etwa bodenparallele ausgehobene Transportstellung und zurück bringbar. Die teilweise ausgehobene Vorgewendestellung ist als eine Zwischenstellung zwischen der Arbeits- und Betriebsstellung und der Transportstellung dann erreicht, wenn die Mäh- und Aufbeieitungseinheiten 8 soweit angehoben sind, daß eine Berührung bereits abgelegter Erntegutschwaden nicht mehr möglich ist.
Nach der Erfindung ist die Arbeitsaggregatekombination 1 nun mit einer Aushubvorrichtung ausgerüstet, welche unter anderem aus den bereits aufgeführten mechanischen Bauteilen, wie die Auslegerarme 13,14 mit nicht dargestellten hydraulischen Kolben-Zylinder-Anordnungen und dem Tragrahmen 16 in Verbindung mit den Lenkern 17,18 und den hydraulischen Kolben-Zylinder-Anordnungen 19,20 besteht. Weiterhin umfaßt die Aushubvorrichtung weitere hydraulische und/oder elektrische Bauteile, welche der Ansteuerung der mechanischen Baugruppen 13,14,16,17,18,19,20 zur Überführung der Arbeitsaggregate 5,6,7 dienen. Zur Regelung der Fahrbewegung des Trägerfahrzeuges 2 ist diesem eine Steuer- und Schalteinrichtung zugeordnet. Vorteilhafterweise ist sowohl die Steuer- und Schalteinrichtung des Fahrantriebes als auch die Aushubvorrichtung mit einem Bordcomputer verbunden, über den sämtliche Funktionen der Arbeitsaggregatekombination 1 gesteuert werden können. Gemäß der Erfindung sind der Arbeitsaggregatekombination 1 und hier insbesondere dem Trägerfahrzeug 2 mechanische und/oder elektrische und/oder hydraulische und/oder pneumatische Schaltelemente zugeordnet, welche eine derartige Koppelung der Aushubvorrichtung mit der Steuer- und Schalteinrichtung des Fahrantriebes ermöglichen, daß bei einer Aktivierung eines Befehls zur Einleitung einer Rückwärtsfahrt im praktischen Einsatz zwangsläufig eine Aushebung der Mäh- und Aufbereitungseinheiten 8 aus der bodennahen Arbeits- und Betriebsstellung in die teilweise ausgehobene Vorgewendestellung erfolgt. In einer vorteilhaften Ausführungsform ist das Trägerfahrzeug so ausgebildet, daß die Schaltelemente zur Koppelung mit dem Bordcomputer verbunden sind, so daß die Koppelung über eine Verknüpfung von Programmabläufen erreichbar ist.

Eine vorteilhafte Weiterbildung der Erfindung geht davon aus, daß beispielsweise bei einer aus einer frontseitig angebauten Mäh- und Aufbereitungseinheit 8 und aus zwei bezüglich der Fahrt- und Arbeitsrichtung seitlich angebrachten Mäh- und Aufbereitungseinheiten 8 bestehenden Arbeitsaggregatekombination 1 eine Folgeschaltung zum Ausheben der Mäh- und Aufbereitungseinheiten 8 vorgesehen. Das bedeutet, daß beim Aushubvorgang der Mäh- und Aufbereitungseinheiten 8 beispielsweise beim Wendevorgang in Vorwärtsfahrt zunächst die frontseitige Mäh- und Aufbereitungseinheit 8 ausgehoben wird und nach Ablauf eines vorgegebenen und der Fahrgeschwindigkeit des Trägerfahrzeuges 2 entsprechenden Zeitintervals auch die seitlich angeordneten Mäh- und Aufbereitungseinheiten 8 ausgehoben werden. Gemäß der Erfindung ist es nun vorgesehen, für den Zeitraum der Rückwärtsfahrt eine derartige Folgeschaltung aufzuheben, da vor dem Beginn der Rückwärtsfahrt natürlich alle Mäh- und Aufbereitungseinheiten 8 gleichzeitig ausgehoben werden müssen, um Beschädigungen an den Aufhängungen der Mäh- und Aufbereitungseinheiten 8 zu vermeiden. Eine solche Aufhebung einer standardmäßigen Funktion ist beispielsweise durch eine zusätzliche Programmanweisung im Bordcomputer erreichbar.

## Patentansprüche

1. Arbeitsaggregatekombination (1) an einem selbstfahrenden Trägerfahrzeug (2), bestehend aus vorzugsweise im landwirtschaftlichen Bereich anwendbaren Arbeitsaggregaten, wie insbesondere Mäheinheiten oder Mäh- und Aufbereitungseinheiten (8) zur Ernte von landwirtschaftlichem Erntegut, wobei das Trägerfahrzeug (2) zumindest ein im Frontanbau angebrachtes Arbeitsaggregat mit zumindest einem weiteren bezüglich der Fahrt- und Arbeitsrichtung des Trägerfahrzeuges (2) im Seitenanbau angeordneten Arbeitsaggregat umfasst, wobei die Arbeitsaggregate durch eine Aushubvorrichtung aus einer bodennahen Arbeits- und Betriebsstellung in eine teilweise ausgehobene Vorgewendestellung oder in eine ganz ausgehobene Transportstellung überführbar sind, **dadurch gekennzeichnet, dass** die Arbeitsaggregate (5,6,7) am Trägerfahrzeug (2), insbesondere die Steuerung der Aushubvorrichtung, derart mit einer Steuer- und Schaltvorrichtung des Fahrantriebes gekoppelt sind, daß mit dem Befehl zur Rückwärtsfahrt des Trägerfahrzeuges (2) zwangsgesteuert die Arbeitsaggregate (5,6,7) zumindest in die teilweise ausgehobene Vorgewendestellung ausheben, wobei die Koppelung zwischen der Aushubvorrichtung und der Steuer- und Schaltvorrichtung des Fahrantriebes über eine Verknüpfung von Programmabläufen des Fahrantriebes und der Aushubvorrichtung erreicht wird.

2. Arbeitsaggregatekombination (1) nach Anspruch 1, **dadurch gekennzeichnet, daß** über die Verknüpfung von Programmabläufen des Fahrantriebes und der Aushubvorrichtung in Verbindung mit einem Befehl zur Rückwärtsfahrt des Trägerfahrzeuges (2) bei der Verwendung von zumindest zwei Arbeitsaggregaten (5,7) oder (6,7) Folgeschaltungen für den Ablauf der Aushubvorrichtung für die Zeit der Rückwärtsfahrt aufgehoben werden.

## Claims

1. Combination (1) of working assemblies on a self-propelled carrying vehicle (2), comprising working assemblies preferably able to be used in the agricultural field, such in particular as mowing units or mowing and conditioning units (8) for harvesting agricultural crops, the carrying vehicle (2) comprising at least one front-mounted working assembly together with at least one further working assembly which, relative to the direction of travel and operation of the carrying vehicle (2), is arranged to be side-mounted, the working assemblies being able to be transferred by a raising arrangement from a working and operating position close to the ground to a partly raised turning position or a fully raised position for transport, **characterised in that** the working assemblies (5, 6, 7) on the carrying vehicle (2), and in particular the control means for the raising arrangement, are coupled to a control and switching arrangement belonging to the travel drive in such a way that, at the command for the carrying vehicle (2) to travel in reverse, the working assemblies (5, 6, 7) rise by positive control at least to the partly raised turning position, the coupling between the raising arrangement and the control and switching arrangement being achieved by a correlation of programmed processes followed by the travel drive and the raising arrangement.

2. Combination (1) of working assemblies according to claim 1, **characterised in that**, when at least two working assemblies (5, 7) or (6, 7) are being used, sequential switching operations for the process followed by the raising arrangement are cancelled out for the period of the travel in reverse by means of the correlation of programmed processes followed by the travel drive and the raising arrangement which takes place in connection with a command for the carrying vehicle (2) to travel in reverse.

## Revendications

1. Combinaison d'unités de travail (1) sur un véhicule porteur automoteur (2), composée d'unités de travail utilisables de préférence dans le domaine agricole, comme notamment des unités de moissonnage ou de fauchage et de tamisage (8) pour des récoltes de produits agricoles, le véhicule porteur (2) comprenant au moins une unité de travail montée à l'avant avec au moins une autre unité de travail disposée latéralement par rapport au sens de marche et de travail du véhicule porteur (2), les unités de travail étant transférables, par un dispositif de levage, d'une position de travail et de fonctionnement près du sol à une position de demi-tour partiellement levée, ou à une position entièrement levée pour le transport,
**caractérisée en ce que**
les unités de travail (5, 6, 7) sur le véhicule porteur (2), notamment la commande du dispositif de levage, sont couplées à un dispositif de commande et de commutation de l'entraînement du véhicule de telle sorte qu'avec la commande de marche arrière du véhicule porteur (2) à commande forcée, les unités de travail (5, 6, 7) se soulèvent au moins dans la position de demi-tour partiellement levée, le couplage entre le dispositif de levage et le dispositif de commande et de commutation de l'entraînement du véhicule étant obtenu grâce à l'exécution d'un enchaînement de programmes de l'entraînement du véhicule et du dispositif de levage.

2. Combinaison d'unités de travail (1) selon la revendication 1,
**caractérisée en ce que**
grâce à l'exécution de l'enchaînement de programmes de l'entraînement du véhicule et du dispositif de levage, en liaison avec une commande de marche arrière du véhicule porteur (2) lors de l'utilisation d'au moins deux unités de travail (5, 7) ou (6, 7), des commutations séquentielles pour le mécanisme du dispositif de levage sont neutralisées pendant la durée de la marche arrière.
